# EUROPEAN PATENT SPECIFICATION

(11) **EP 3 761 474 B1**
(45) Date of publication and mention of the grant of the patent: **11.06.2025**
(21) Application number: 18908211.8
(22) Date of filing: 14.06.2018
(51) Int. Cl.: H02J 7/00, H01R 13/631, H01M 50/20, B60L 53/80, B60L 53/30, H01M 10/48, H01M 50/204, H01M 50/249, H01M 50/296

(54) **BATTERY CHARGING DEVICE, BATTERY STORAGE FRAME AND BATTERY OPERATION PLATFORM**
BATTERIELADEVORRICHTUNG, BATTERIESPEICHERRAHMEN UND BATTERIEBETRIEBSPLATTFORM
DISPOSITIF DE CHARGE DE BATTERIE, BÂTI DE STOCKAGE DE BATTERIE ET PLATEFORME D'EXPLOITATION DE BATTERIE

(30) Priority: 28.02.2018 CN 201820283317 U
(43) Date of publication of application: 06.01.2021
(73) Proprietor: Nio (Anhui) Holding Co., Ltd., Hefei, Anhui 230601 (CN)
(72) Inventor: QI, Wengang, Shanghai (CN); ZHAO, Zhiling, Shanghai (CN); HAO, Zhanduo, Shanghai (CN); YANG, Chao, Shanghai (CN)
(74) Representative: Vossius & Partner Patentanwälte Rechtsanwälte mbB
(86) International application number: PCT/CN2018/091278
(87) International publication number: WO 2019/165725

(56) References cited:
- EP-A1- 3 163 709
- CN-A- 106 099 537
- CN-A- 106 891 865
- CN-U- 201 797 160
- CN-U- 205 452 693
- CN-U- 205 951 929
- CN-U- 205 960 326
- CN-U- 205 960 326
- CN-U- 206 379 568
- US-A- 5 538 809

## Description

### Technical Field

The invention relates to the technical field of vehicles, and in particular to a battery charging device, a battery storage rack and a battery operation platform.

### Background Art

With the progress of science and technology and the development of society, various types of new energy vehicles such as battery electric vehicles and hybrid electric vehicles are increasingly widely used. With regard to these novel vehicles, technologies involving fast battery swapping and the like have increasingly become a focus and research topic in this field. For example, the battery power supplement time will be an important indicator, if the user experience of battery charging for vehicles is to overmatch that of the fuelling for traditional vehicles. Battery swapping is a way to achieve quick power supplement. Before breakthrough progress is made in battery technology and available safe quick charging technology occurs, battery swapping will still be the most possible way to alleviate users' anxiety about available driving range, and to achieve that the vehicle battery power supplement time can be comparable to or even overmatch that of the fuelling for traditional vehicles.

How to achieve fast charging, energy supplement and reliable and safe charging is a difficulty and key core technology for wide use of battery swap technology and commercial operation for large-scale battery swap. Although various battery swap approaches have appeared, they still have problems such as large spaces occupied by devices, complicated operations and poor reliability, high manufacturing costs, and difficulty in maintenance. Therefore, it is quite necessary to carry out adequate studies on the existing problems or defects including those mentioned above, so as to make improvements.

CN 205 951 929 U relates to a small automatic transmission station.

CN 205 960 326 U relates to an automatic plug charging and charging device for a power battery.

WO 2018/068559 A1 relates to a chassis type substation for electric vehicles and a method for changing electric power.

CN 201 797 160 U relates to an automatic pull and plug device for charging a vehicle power battery.

US 5 538 809 A relates to a system for facilitating the connection of replaceable batteries to a charging device either located at a replacement station or otherwise operated by the owner of the vehicle.

CN 205 452 693 U relates to a floating plane connector for a passenger car.

### Summary of the Invention

The invention is defined by independent claim 1. Further embodiments of the invention are defined by the dependent claims. In view of this, the invention provides a battery charging device, a battery storage rack, and a battery operation platform, thereby effectively solving or alleviating one or more of the above problems and other problems in the prior art.

Firstly, according to a first aspect of the invention, provided is a battery charging device used to charge a battery in a storage space of a battery storage rack. The battery charging device comprises:
a first bracket installed on the battery storage rack;
a charging terminal unit provided with a first connector, one end of the first connector being connected to a power source for supplying electrical energy, and the other end thereof being configured to match a battery terminal connector on the battery for charging the battery after the first connector is engaged with the battery terminal connector;
a second bracket arranged adjacent to the first bracket, the charging terminal unit being installed on the second bracket; and
a driving unit configured to provide a driving force to move the second bracket relative to the first bracket, so as to cause the first connector to engage with or disengage from the battery terminal connector.

In the battery charging device according to the invention, optionally, the charging terminal unit comprises:
a first part installed on the second bracket; and
a second part provided with the first connector, the second part being supported on the first part and having degrees of freedom of floating on a horizontal plane relative to the first part and of twisting.

In the battery charging device according to the invention, optionally, two opposite ends of the first part are respectively provided with two elastic components for supporting the second part such that the second part is floatable on the horizontal plane relative to the first part and is twistable.

In the battery charging device according to the invention, optionally, the second part is further provided with one or more second connectors for detachably engaging with corresponding connectors on the battery to transmit a signal related to a battery charging operation.

In the battery charging device according to the invention, optionally, an end portion of the one end of the first connector and/or an end portion of the battery terminal connector is provided with an elastic component, and an electrical connection is achieved via the elastic component after the first connector is engaged with the battery terminal connector.

In the battery charging device according to the invention, optionally, one of the first connector and the battery terminal connector is configured as a pin structure, and the other thereof is configured as a hole structure matching the pin structure.

In the battery charging device according to the invention, optionally, the driving unit comprises at least one air cylinder and at least two linear bearings, the air cylinder is installed on the first bracket for providing the driving force, and the linear bearings are installed on the first bracket for movably supporting guide members correspondingly provided on the second bracket.

In the battery charging device according to the invention, optionally, two air cylinders are provided, which are arranged on two sides of the first bracket, respectively.

In the battery charging device, optionally and not part of the invention, the driving unit comprises an electric motor and a linear guide rail, the electric motor is installed on the first bracket for providing the driving force, and the linear guide rail is installed on the first bracket for movably supporting a guide member correspondingly provided on the second bracket.

In the battery charging device according to the invention, optionally, the battery storage rack is configured as a single-sided cantilever structure.

Secondly, according to a second aspect of the invention, provided is a battery storage rack, comprising one or more storage spaces for storing batteries, each storage space being provided with a battery charging device as described in any one of the above.

In addition, according to a third aspect of the invention, there is also provided a battery operation platform, characterized in that the battery operation platform is provided with one or more battery storage racks as described above.

Compared with the prior art, the battery charging device of the invention has many advantages such as compact structure, small footprint, reliable functional operation, good maintainability and low costs. In the technical solution of the invention, in particular, it is designed and provided to allow for degrees of freedom of horizontal floating and twisting during pluggable engagement operation of a battery charging interface, so that the position and posture adjustment and the positioning of the battery can be efficiently achieved, the complexity of the device itself is reduced, the reliability of safe operation is improved, and the battery itself and related components are effectively protected. The application of the invention can significantly improve the existing battery charging devices, and effectively enhance the space utilization, the reliability and the expandability of the battery charging and swapping system.

### Brief Description of the Drawings

The technical solution of the invention will be further described in detail below with reference to accompanying drawings and embodiments. However, it should be understood that these accompanying drawings are designed for the purpose of illustration only and therefore are not intended to limit the scope of the invention. In addition, unless otherwise specified, these accompanying drawings are intended to be merely conceptually illustrative of the structural configurations described herein, and are not necessarily drawn to scale.
Fig. 1 is a schematic perspective structural view of one embodiment of a battery charging device according to the invention that is arranged on a battery storage rack.
Fig. 2 is a schematic perspective structural view of a charging terminal unit in the embodiment of the battery charging device shown in Fig. 1.
Fig. 3 is a schematic perspective structural view of a first bracket, a second bracket, and a driving unit in the embodiment of the battery charging device shown in Fig. 1, with the charging terminal unit being omitted.
Fig. 4 is a schematic perspective structural view of a driving unit when taking the form of a pneumatic mechanism in the embodiment of the battery charging device shown in Fig. 1.

### Detailed Description of Embodiments

First, it should be noted that the structures, compositions, features, and advantages of a battery charging device, a battery storage rack, and a battery operation platform of the invention will be specifically described below by way of example. However, all the descriptions are for the purpose of illustration only and should not be construed as limiting the invention in any way. The technical term "battery" as used herein includes, but is not limited to, a battery, a set of batteries, a battery pack, etc. used to power a vehicle.

In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein. Additionally, in order to simplify the figures, the same or similar parts and features may only be marked at one or several places in one and the same figure.

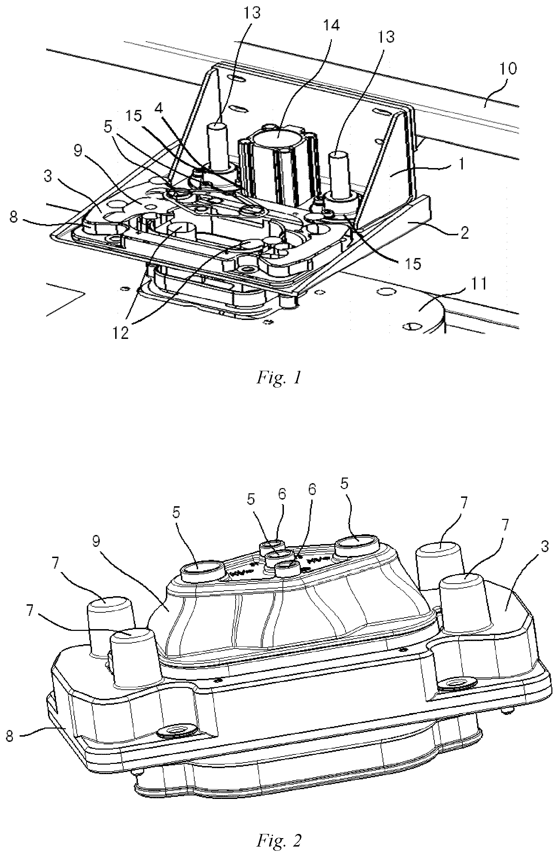

Referring to Figs. 1 to 4, these figures schematically show the basic structure and composition of one embodiment of a battery charging device according to the invention, which will be described in detail below.

In this given embodiment, the battery charging device is provided to charge a battery to supplement same with power. As shown in Fig. 1, a battery 11 to be charged and supplemented with energy is placed in a storage space of a battery storage rack 10. Such a battery 11 may be a used battery that is unloaded from a vehicle by a battery swap operation device and then moved into the storage space of the battery storage rack 10, and is recharged such that the battery is supplemented with power and restored, so that the battery 11 can then be moved out of the storage space of the battery storage rack 10 when needed and loaded into a vehicle with a battery needing to be swapped. It should be understood that the above-mentioned vehicle includes but is not limited to a battery electric vehicle, a hybrid battery vehicle, etc.

The battery charging device comprises a first bracket 1, a second bracket 2, a charging terminal unit 3, and a driving unit 4. The first bracket 1 is installed on the battery storage rack 10 by any suitable means such as bolt connection, and the battery storage rack 10 may have a single-sided cantilever structure in order to simplify the structure and increase the space utilization, and it is also possible to provide devices such as a sensor and a cable on the battery storage rack 10, so as to facilitate daily equipment operation, maintenance and overhaul.

As shown in Fig. 1, the second bracket 2 and the first bracket 1 are arranged adjacent to each other, and the charging terminal unit 3 is installed on the second bracket 2 such that the second bracket 2 can be driven by the driving unit 4 to move relative to the first bracket 1, thereby enabling the battery charging device to engage with the battery 11 to be charged and then transfer electrical energy to the battery, or enabling the disengagement of them after the battery 11 is fully charged to end this charging operation.

Specifically, referring to Figs. 1 to 4 at the same time, a first connector 5 is provided on the charging terminal unit 3 for connecting a power source for supplying electrical energy and the battery 11 to be charged, that is, one end of the first connector 5 is connected to the power source, and the other end thereof matches a battery terminal connector 12 on the battery 11 (for example, they match with each other by means of correspondingly adapted structures such a pin and a hole), so that after the first connector 5 is operatively engaged with the battery terminal connector 12, an electrical connection path from the power source to the battery 11 can be formed. In this way, electric energy can be continuously transmitted to the battery 11 until the battery 11 is fully charged, and then the first connector 5 can be disengaged from the battery terminal connector 12 by operating the driving unit 4 to disconnect the electrical connection path, that is, this charging operation is completed.

Fig. 2 schematically, roughly shows a perspective structure of the charging terminal unit 3 in this embodiment. In terms of the first connector 5, it can be understood that it needs to be provided with a positive terminal, a negative terminal and a grounding terminal in order to form a charging current circuit. Fig. 2 illustrates the positive terminal, the grounding terminal, and the negative terminal provided on a left side, the middle, and a right side of the charging terminal unit 3, respectively. However, in practice, it is possible to integrate the positive terminal, the negative terminal and the grounding terminal together into a single interface that uses a concentric arrangement in such a way that they are reliably electrically insulated from one another, thereby obtaining a more compact structural layout. Of course, this also requires the battery terminal connector to use a structural design that perfectly matches thereto.

As an example, in an optional case, an elastic component (such as a coil spring and an elastic sheet) may be provided on an end portion of the first connector 5 that is correspondingly engaged with the battery terminal connector 12 so as to provide a protection function against over-insertion when the first connector 5 and the battery terminal connector 12 are being engaged, thereby effectively preventing damage to components in the battery and the battery charging device. After the first connector 5 and the battery terminal connector 12 on the battery are detachably engaged together, the elastic component between them should be able to ensure the electrical connection path from the power source to the battery 11, thus completing the charging and energy supplement operation for the battery 11.

In addition, in an optional case, one or more second connectors 6 may also be provided on the charging terminal unit 3 as shown in Fig. 2, such connectors are used to transfer a signal related to the battery charging operation in order to more accurately and effectively control the charging operation. For example, when the first connector 5 and the battery terminal connector 12 are operatively engaged together, this signal can be transmitted to a corresponding control device or system via the second connector 6 by means of a sensor provided on the battery 11 or the battery charging device, so that the control device or system can initiate the charging operation accordingly. As another example, when the battery 11 has been fully charged, this signal can be transmitted to the corresponding control device or system via the second connector 6 so that the first connector 5 and the battery terminal connector 12 can be accurately disengaged in a timely manner. In addition, when a fault or abnormality occurs during charging of the battery 11, such a signal can also be transmitted to the corresponding control device or system via the second connector 6, so that corresponding measures can be taken in a timely manner to eliminate potential safety hazards.

In this embodiment of the battery charging device, the charging terminal unit 3 is optionally configured to comprise two parts, namely a first part 8 installed on the second bracket 2 and a second part 9 supported on the first part 8. The reason for adopting this structural arrangement is that the second part 9 can be further preferably configured to have such degrees of freedom that not only can the second part float on a horizontal plane relative to the first part 8 but can also perform a twisting movement. In this way, the complexity of the device itself and the manufacturing and maintenance costs can be greatly reduced. Especially even in the case of a certain deflection and positioning error occurring in the battery terminal connector 1, it is also possible to insert and engage the first connector 5 arranged on the second part 9 into the battery terminal connector 12 very accurately, or to withdraw the first connector 5 out of the battery terminal connector 12 to disengage them from the previously engaged state.

As an exemplary illustration, some elastic components such as springs may be arranged on the first part 8 of the charging terminal unit 3 such that the second part 9 has the above-mentioned degrees of freedom of spatial movement. For example, as shown in Fig. 2, four elastic components 7 may be optionally arranged on the first part 8, that is, two elastic components 7 are provided on each of two opposite ends of the first part 8 respectively, elastic forces provided by these elastic components 7 elastically support the second part 9 of the charging terminal unit 3, such that the second part 9 can float on the horizontal plane relative to the first part 8 and can be twisted. Therefore, a self-return function is provided to realize a safe and reliable engagement or disengage operation, that is, insertion/withdrawal operation, between the connectors.

In addition, for those skilled in the art, it can be understood that, in the invention, cables or harnesses for various connectors may preferably be highly flexible electric cables, so that it is possible to better adapt to the insertion/withdrawal operation between the connectors, thereby ensuring the entire device is safe and reliable in operation, and is durable.

The driving unit 4 is used as a power part in this battery charging device to provide a driving force to realize engagement or disengagement operation between the first connector 5 and the battery terminal connector 12.

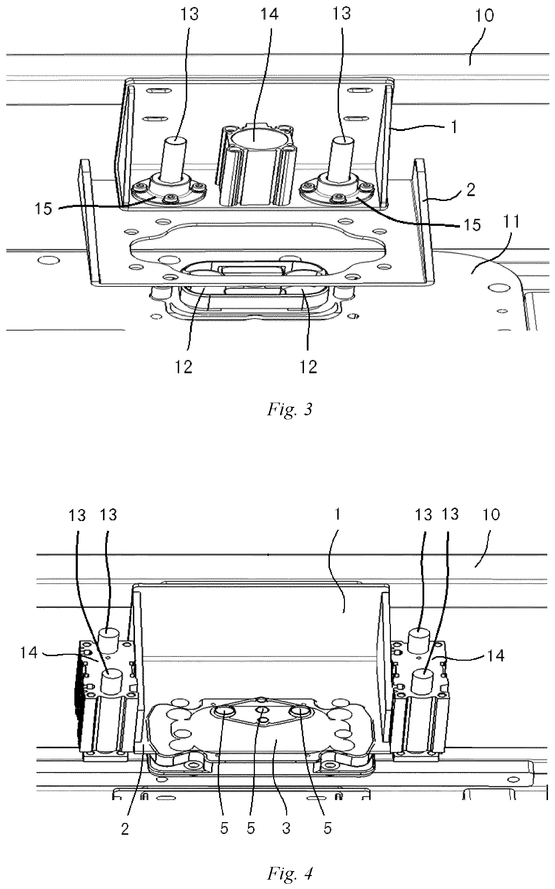

In the case of light load, as shown in Fig. 3, one air cylinder 14 and two linear bearings 15 may be provided to realize the above function of the driving unit 4. Specifically, the air cylinder 14 is arranged on the first bracket 1 and the two linear bearings 15 may be arranged on two sides of the air cylinder 14 respectively. The two linear bearings 15 are used to movably support two guide members 13 correspondingly provided on the second bracket 2. When the air cylinder 14 is activated to provide a driving force pneumatically such that the second bracket 2 moves relative to the first bracket 1, by means of the linear bearings 15 and the guide members 13, it is possible to restrain a relative movement trajectory between the second bracket 2 and the first bracket 1 (that is, the perpendicularity of insertion/withdrawal of the connector) as expected, thereby ensuring a reliable engagement or disengagement operation between the connectors on the charging terminal unit 3 and the battery 11.

In addition, in the case of heavy load, it may also be contemplated that two air cylinders 14 are used at the same time, which are arranged on two sides of the first bracket 1 as shown in Fig. 4, so that it is possible to achieve the insertion/withdrawal operation between the connectors with a greater driving force. Of course, it should also be understood that the above-mentioned specifically set number and arrangement positions of the linear bearings 15 are allowed to be flexibly selected and adjusted according to actual applications.

As yet another example not part of the invention, an electric motor driving approach can also be used to realize the function of the driving unit 4, which can be used in the case of light load, etc. Specifically, an electric motor may be installed on the first bracket 1 to provide the driving force required by the driving unit 4, and a linear guide rail may also be installed on the first bracket 1. Such a linear guide rail is used to movably support a guide member correspondingly provided on the second bracket 2, that is, when the electric motor is activated to operate to provide the driving force such that the second bracket 2 moves relative to the first bracket 1, by means of the linear guide rail and the guide member on the second bracket 2, it is possible to restrain a relative movement trajectory between the second bracket 2 and the first bracket 1 (that is, the perpendicularity of insertion/withdrawal of the connector) as expected, thereby ensuring a reliable engagement or disengagement operation between the corresponding connectors on the charging terminal unit 3 and the battery 11.

As described above, the invention provides a battery charging device with a compact structure, which is not only easy to assemble, use, repair and maintain, has low costs and is reliable in functional operation, but can also effectively realize accurate, reliable and safe insertion/withdrawal operation for the battery charging connector located in the battery storage rack, so as to efficiently complete energy supplement and power storage of the battery. The battery charging device provided according to the invention overcomes the aforementioned shortcomings and deficiencies in the prior art, and in particular successfully solves technical problem of, for example, the expectation that the used battery can be transported to the battery storage system from the vehicle after battery swap to implement fast and reliable charging and energy supplement, and the complexity and cost of the device itself can be reduced. The application of the invention can improve the existing battery swap devices, and this has positive effects for the further promotion of the use of new energy vehicles, the promotion of environmental protection, etc.

According to another technical solution of the invention, there is also provided a battery storage rack having one or more storage spaces for storing batteries. The battery charging device designed and provided according to the invention may be provided in each storage space of such a battery storage rack, so as to give full play to the obvious technical advantages as described above provided by the solution of the invention.

In addition, according to yet another technical solution of the invention, there is also provided a battery operation platform. One or more battery storage racks designed and provided above according to the invention may be provided on the battery operation platform, such that when such battery storage racks store batteries, battery charging devices designed and provided by the invention can be used to charge the batteries safely and reliably. It should be understood that the operations that can be achieved by the battery operation platform include, but are not limited to, battery swap, charging, and monitoring of battery information (such as state of charge, health level, number of uses, etc. of a battery), and after completing the charging and energy supplement, the vehicle battery can be loaded into various types of new energy vehicles such as battery electric vehicles and hybrid electric vehicles, and put into use.

The battery charging device, the battery storage rack, and the battery operation platform according to the invention are merely illustrated in detail as above by way of example. These examples are for the purpose of illustrating the principle of the invention and the implementations thereof only, rather than limiting the invention.

## Claims

1. A battery charging device used to charge a battery (11) in a storage space of a battery storage rack (10), comprising:
a first bracket (1) installed on the battery storage rack (10);
a charging terminal unit (3) provided with a first connector (5), one end of the first connector (5) being connected to a power source for supplying electrical energy, and the other end thereof being configured to match a battery terminal connector (12) on the battery (11) for charging the battery (11) after the first connector (5) is engaged with the battery terminal connector (12);
a second bracket (2) arranged adjacent to the first bracket (1), the charging terminal unit (3) being installed on the second bracket (2); and
a driving unit (4) configured to provide a driving force to move the second bracket (2) relative to the first bracket (1), so as to cause the first connector (5) to engage with or disengage from the battery terminal connector(12),
**characterized in that** the driving unit (4) comprises at least one air cylinder (14) and at least two linear bearings (15), the air cylinder (14) is installed on the first bracket (1) for providing the driving force, and the linear bearings (15) are installed on the first bracket (1) for movably supporting guide members (13) correspondingly provided on the second bracket (2).

2. The battery charging device according to claim 1, **characterized in that** the charging terminal unit (3) comprises:
a first part (8) installed on the second bracket (2); and
a second part (9) provided with the first connector (5), the second part (9) being supported on the first part (8) and having degrees of freedom of floating on a horizontal plane relative to the first part (8) and of twisting.

3. The battery charging device according to claim 2, **characterized in that** two opposite ends of the first part (8) are respectively provided with two elastic components (7) for supporting the second part (9) such that the second part (9) is floatable on the horizontal plane relative to the first part (8) and is twistable.

4. The battery charging device according to claim 2, **characterized in that** the second part (9) is further provided with one or more second connectors (6) for detachably engaging with corresponding connectors on the battery to transmit a signal related to a battery charging operation.

5. The battery charging device according to claim 1, **characterized in that** an end portion of the one end of the first connector (5) and/or an end portion of the battery terminal connector (12) is provided with an elastic component, and an electrical connection is achieved via the elastic component after the first connector (5) is engaged with the battery terminal connector (12).

6. The battery charging device according to claim 1, **characterized in that** one of the first connector (5) and the battery terminal connector (12) is configured as a pin structure, and the other thereof is configured as a hole structure matching the pin structure.

7. The battery charging device according to claim 1, **characterized in that** two air cylinders (14) are provided, which are arranged on two sides of the first bracket (1), respectively.

8. The battery charging device according to any one of claims 1 to 6, **characterized in that** the driving unit (4) comprises an electric motor and a linear guide rail, the electric motor is installed on the first bracket (1) for providing the driving force, and the linear guide rail is installed on the first bracket (1) for movably supporting a guide member (13) correspondingly provided on the second bracket (2).

9. The battery charging device according to any one of claims 1 to 6, **characterized in that** the battery storage rack (10) is configured as a single-sided cantilever structure.

10. A battery storage rack (10), **characterized by** comprising one or more storage spaces for storing batteries, each storage space being provided with a battery charging device according to any one of claims 1-9.

11. A battery operation platform, **characterized in that** the battery operation platform is provided with one or more battery storage racks (10) according to claim 10.

## Patentansprüche

1. Batterieladevorrichtung, die genutzt wird, um eine Batterie (11) an einem Lagerplatz eines Batterielagergestells (10) zu laden, umfassend:
einen ersten Halter (1), der auf dem Batterielagergestell (10) installiert ist;
eine Ladeanschlusseinheit (3), die mit einem ersten Verbinder (5) versehen ist, wobei ein Ende des ersten Verbinders (5) mit einer Stromquelle zum Zuführen von elektrischer Energie verbunden ist und das andere Ende davon so ausgebildet ist, dass es mit einem Batterieanschlussverbinder (12) auf der Batterie (11) zum Laden der Batterie (11) zusammenpasst, nachdem der erste Verbinder (5) mit dem Batterieanschlussverbinder (12) in Eingriff gebracht worden ist;
einen zweiten Halter (2), der benachbart zu dem ersten Halter (1) angeordnet ist, wobei die Ladeanschlusseinheit (3) auf dem zweiten Halter (2) installiert ist; und
eine Antriebseinheit (4), die dazu ausgebildet ist, eine Antriebskraft zum Bewegen des zweiten Halters (2) relativ zu dem ersten Halter (1) bereitzustellen, um zu bewirken, dass der erste Verbinder (5) mit dem Batterieanschlussverbinder (12) in Eingriff oder von diesem außer Eingriff gelangt,
**dadurch gekennzeichnet, dass** die Antriebseinheit (4) mindestens einen Luftzylinder (14) und mindestens zwei Linearlager (15) umfasst, der Luftzylinder (14) auf dem ersten Halter (1) zum Bereitstellen der Antriebskraft installiert ist und die Linearlager (15) auf dem ersten Halter (1) zum beweglichen Tragen von entsprechend auf dem zweiten Halter (2) bereitgestellten Führungselementen (13) installiert sind.

2. Batterieladevorrichtung nach Anspruch 1, **dadurch gekennzeichnet, dass** die Ladeanschlusseinheit (3) Folgendes umfasst:
ein erstes Teil (8), das auf dem zweiten Halter (2) installiert ist; und
ein zweites Teil (9), das mit dem ersten Verbinder (5) versehen ist, wobei das zweite Teil (9) auf dem ersten Teil (8) getragen wird und Freiheitsgrade einer freien Beweglichkeit auf einer Horizontalebene relativ zu dem ersten Teil (8) und einer Schwenkung aufweist.

3. Batterieladevorrichtung nach Anspruch 2, **dadurch gekennzeichnet, dass** zwei gegenüberliegende Enden des ersten Teils (8) jeweils mit zwei elastischen Komponenten (7) zum Tragen des zweiten Teils (9) versehen sind, sodass das zweite Teil (9) auf der Horizontalebene relativ zu dem ersten Teil (8) frei beweglich ist und schwenkbar ist.

4. Batterieladevorrichtung nach Anspruch 2, **dadurch gekennzeichnet, dass** das zweite Teil (9) ferner mit einem oder mehreren zweiten Verbindern (6) zum lösbaren In-Eingriff-Bringen mit entsprechenden Verbindern auf der Batterie versehen ist, um ein auf einen Batterieladevorgang bezogenes Signal zu übertragen.

5. Batterieladevorrichtung nach Anspruch 1, **dadurch gekennzeichnet, dass** ein Endabschnitt des einen Endes des ersten Verbinders (5) und/oder ein Endabschnitt des Batterieanschlussverbinders (12) mit einer elastischen Komponente versehen sind/ist und über die elastische Komponente eine elektrische Verbindung erzielt wird, nachdem der erste Verbinder (5) mit dem Batterieanschlussverbinder (12) in Eingriff gebracht worden ist.

6. Batterieladevorrichtung nach Anspruch 1, **dadurch gekennzeichnet, dass** entweder der erste Verbinder (5) oder der Batterieanschlussverbinder (12) als eine Stiftstruktur ausgebildet ist und das andere dieser beiden Elemente als eine mit der Stiftstruktur zusammenpassende Lochstruktur ausgebildet ist.

7. Batterieladevorrichtung nach Anspruch 1, **dadurch gekennzeichnet, dass** zwei Luftzylinder (14) bereitgestellt sind, die jeweils auf zwei Seiten des ersten Halters (1) angeordnet sind.

8. Batterieladevorrichtung nach einem der Ansprüche 1 bis 6, **dadurch gekennzeichnet, dass** die Antriebseinheit (4) einen Elektromotor und eine Linearführungsschiene umfasst, der Elektromotor auf dem ersten Halter (1) installiert ist, um die Antriebskraft bereitzustellen, und die Linearführungsschiene auf dem ersten Halter (1) installiert ist, um ein entsprechend auf dem zweiten Halter (2) bereitgestelltes Führungselement (13) beweglich zu tragen.

9. Batterieladevorrichtung nach einem der Ansprüche 1 bis 6, **dadurch gekennzeichnet, dass** das Batterielagergestell (10) als eine einseitige freitragende Struktur ausgebildet ist.

10. Batterielagergestell (10), **dadurch gekennzeichnet, dass** es einen oder mehrere Lagerplätze zum Lagern von Batterien umfasst, wobei jeder Lagerplatz mit einer Batterieladevorrichtung nach einem der Ansprüche 1-9 versehen ist.

11. Batteriebetriebsplattform, **dadurch gekennzeichnet, dass** die Batteriebetriebsplattform mit einem oder mehreren Batterielagergestellen (10) nach Anspruch 10 versehen ist.

## Revendications

1. Dispositif de charge de batterie utilisé pour charger une batterie (11) dans un espace de stockage d'un bâti de stockage de batterie (10), comprenant :
un premier support (1) installé sur le bâti de stockage de batterie (10) ;
une unité de borne de charge (3) pourvue d'un premier connecteur (5), une extrémité du premier connecteur (5) étant connectée à une source d'alimentation pour fournir de l'énergie électrique, et l'autre extrémité de celui-ci étant configurée pour s'adapter à un connecteur de borne de batterie (12) sur la batterie (11) afin de charger la batterie (11) après que le premier connecteur (5) est mis en prise avec le connecteur de borne de batterie (12) ;
un deuxième support (2) agencé de façon adjacente au premier support (1), l'unité de borne de charge (3) étant installée sur le deuxième support (2) ; et
une unité d'entraînement (4) configurée pour apporter une force d'entraînement afin de déplacer le deuxième support (2) relativement au premier support (1), de façon à amener le premier connecteur (5) à se mettre en prise avec, ou hors de prise d'avec, le connecteur de borne de batterie (12),
**caractérisé en ce que** l'unité d'entraînement (4) comprend au moins un vérin pneumatique (14) et au moins deux paliers linéaires (15), le vérin pneumatique (14) est installé sur le premier support (1) pour apporter la force d'entraînement, et les paliers linéaires (15) sont installés sur le premier support (1) afin de soutenir de de façon mobile des éléments de guidage (13) prévus de façon correspondante sur le deuxième support (2).

2. Dispositif de charge de batterie selon la revendication 1, **caractérisé en ce que** l'unité de borne de charge (3) comprend :
une première partie (8) installée sur le deuxième support (2) ; et
une deuxième partie (9) pourvue du premier connecteur (5), la deuxième partie (9) étant soutenue sur la première partie (8) et ayant des degrés de liberté pour flotter sur un plan horizontal relativement à la première partie (8) et pour tourner.

3. Dispositif de charge de batterie selon la revendication 2, **caractérisé en ce que** deux extrémités opposées de la première partie (8) sont respectivement pourvues de deux composants élastiques (7) pour soutenir la deuxième partie (9) de telle sorte que la deuxième partie (9) puisse flotter sur le plan horizontal relativement à la première partie (8) et puisse tourner.

4. Dispositif de charge de batterie selon la revendication 2, **caractérisé en ce que** la deuxième partie (9) est en outre pourvue d'un ou de plusieurs deuxièmes connecteurs (6) pour se mettre en prise de façon détachable avec des connecteurs correspondants sur la batterie afin de transmettre un signal associé à une exploitation de charge de batterie.

5. Dispositif de charge de batterie selon la revendication 1, **caractérisé en ce qu'**une portion d'extrémité de la première extrémité du premier connecteur (5) et/ou une portion d'extrémité du connecteur de borne de batterie (12) est pourvue d'un composant élastique, et une connexion électrique est obtenue par l'intermédiaire du composant élastique après que le premier connecteur (5) est mis en prise avec le connecteur de borne de batterie (12).

6. Dispositif de charge de batterie selon la revendication 1, **caractérisé en ce que** l'un du premier connecteur (5) et du connecteur de borne de batterie (12) est configuré comme une structure de broche, et l'autre de ceux-ci est configuré comme une structure de trou correspondant à la structure de broche.

7. Dispositif de charge de batterie selon la revendication 1, **caractérisé en ce que** deux vérins pneumatiques (14) sont prévus, qui sont agencés sur deux côtés du premier support (1), respectivement.

8. Dispositif de charge de batterie selon l'une quelconque des revendications 1 à 6, **caractérisé en ce que** l'unité d'entraînement (4) comprend un moteur électrique et un rail de guidage linéaire, le moteur électrique est installé sur le premier support (1) pour apporter la force d'entraînement, et le rail de guidage linéaire est installé sur le premier support (1) pour soutenir de façon mobile un élément de guidage (13) prévu de façon correspondante sur le deuxième support (2).

9. Dispositif de charge de batterie selon l'une quelconque des revendications 1 à 6, **caractérisé en ce que** le bâti de stockage de batterie (10) est configuré comme une structure en porte-à-faux monoface.

10. Bâti de stockage de batterie (10), **caractérisé en ce qu'**il comprend un ou plusieurs espaces de stockage pour stocker des batteries, chaque espace de stockage étant pourvu d'un dispositif de charge de batterie selon l'une quelconque des revendications 1 à 9.

11. Plateforme d'exploitation de batterie, **caractérisée en ce que** la plateforme d'exploitation de batterie est pourvue d'un ou de plusieurs bâtis de stockage de batterie (10) selon la revendication 10.
